# EUROPÄISCHE PATENTSCHRIFT

(11) **EP 3 907 125 B1**
(45) Veröffentlichungstag und Bekanntmachung des Hinweises auf die Patenterteilung: **15.04.2026**
(21) Anmeldenummer: 21170327.7
(22) Anmeldetag: 24.04.2021
(51) Int. Cl.: B62J 1/20, B62J 1/22, B62J 1/26, B62J 1/00

(54) **FAHRRADSATTELHÜLLE**
BICYCLE SADDLE COVER
HOUSSE DE SELLE DE VÉLO

(30) Priorität: 07.05.2020 DE 202020001983 U
(43) Veröffentlichungstag der Anmeldung: 10.11.2021
(73) Patentinhaber: SQlab GmbH, 82024 Taufkirchen (DE)
(72) Erfinder: Hild, Tobias, 82024 Taufkirchen (DE); Schlecht, Michael, 85521 Ottobrunn (DE)
(74) Vertreter: MERH-IP Matias Erny Reichl Hoffmann Patentanwälte PartG mbB

(56) Entgegenhaltungen:
- TW-A- 201 302 533
- TW-U- M 540 078
- US-A- 5 203 607
- US-A- 5 911 475
- US-A1- 2004 051 352
- US-B2- 7 651 162

## Beschreibung

### Technisches Gebiet

Die vorliegende Erfindung betrifft eine Fahrradsattelhülle mit einem Befestigungselement, welches ausgebildet ist, eine Fahrradsattelschale eines Fahrradsattels eines Fahrrads zu hintergreifen, um die Fahrradsattelhülle zumindest formschlüssig an der Fahrradsattelschale zu befestigen, sowie einen Fahrradsattel, welcher an einem Fahrradrahmen eines Fahrrads befestigbar ist, wobei der Fahrradsattel eine Fahrradsattelschale und eine entsprechende an der Fahrradsattelschale befestigte Fahrradsattelhülle aufweist.

### Stand der Technik

Es ist bekannt, dass ein herkömmlicher Fahrradsattel eine Fahrradsattelschale aufweist, die aus einem harten, widerstandsfähigen Material geformt ist, um das Gewicht des auf dem entsprechenden Fahrradsattel sitzenden Fahrradfahrers aufzunehmen.

Um ein ergonomisch vorteilhaftes Sitzen des Fahrradfahrers auf einem entsprechenden Fahrradsattel sicherzustellen, weist ein herkömmlicher Fahrradsattel üblicherweise eine Dämpfung aus einem weichen Material auf, welche auf der Fahrradsattelschale angebracht sind, und welche eine angenehme Auflage des Gesäßes des Fahrradfahrers auf dem Fahrradsattel ermöglicht.

Ferner ist bekannt, dass ein herkömmlicher Fahrradsattel insbesondere einen Fahrradsattelbezug aufweisen kann, welcher auf der auf der Fahrradsattelschale angebrachten Dämpfung angeordnet ist, um einen wirksamen Schutz der Dämpfung sicherzustellen.

Bei einem herkömmlichen Fahrradsattel besteht oftmals das Problem, dass die auf der Fahrradsattelschale angebrachte Dämpfung unlösbar mit der Fahrradsattelschale verbunden ist, und aus diesem Grund, z.B. bei einer Beschädigung der Dämpfung, der gesamte Fahrradsattel ausgetauscht werden muss, was für den Nutzer zu einem hohen Kostenaufwand führt.

Ein weiteres Problem ist, dass die auf der Fahrradsattelschale eines herkömmlichen Fahrradsattels angeordnete Dämpfung üblicherweise in einer standardisierten Ausführung verwendet wird. Aufgrund der standardisierten Ausführung erfolgt üblicherweise keine individuelle Anpassung einer entsprechenden Dämpfung in Bezug auf unterschiedliche Fahrradfahrer, z.B. in Bezug auf Gewicht und/oder Anatomie, oder in Bezug auf unterschiedliche Fahrstrecken, z.B. in Bezug auf eine Mountainbike-Tour im Gelände oder Rennrad-Tour auf der Straße.

Zudem kann ein entsprechend herkömmlicher Fahrradsattel mit einer standardisiert ausgeführten Dämpfung und/oder einem standardisiert ausgeführten Fahrradsattelbezug individuelle Designwüsche des jeweiligen Fahrradfahrers, z.B. in Bezug auf Form und Farbe, oftmals nur unzureichend abbilden.

Die EP 3 441 291 A1 offenbart einen ergonomischen Fahrradsattel zur Druckentlastung der Sitzknochen. Weitere Fahrradsättel zur Druckentlastung der Sitzknochen sind aus der DE 20 2004 014 467 U1, DE 20 2005 013 749 U1, DE 20 2007 008 321 U1 bzw. EP 2 003 046 B1, EP 2 965 974 A1, sowie DE 20 2016 005 063 U1 bzw. EP 3 284 663 B1 bekannt.

Die Druckschrift TW M540078 U offenbart einen Fahrradsattel und eine Fahrradsattelhülle gemäß dem Oberbegriff des Anspruchs 1. |. Die Druckschrift TW 201302533 A1 offenbart einen Fahrradsattel. Die Druckschrift US 5,911,475 offenbart einen Fahrradsattel. Das Patent US 7 651 162 B2 offenbart einen Fahrradsattel. Die Druckschrift US 2004/0051352 A1 offenbart einen Fahrradsattel.

### Offenlegung der Erfindung

Die vorliegende Erfindung stellt sich zur Aufgabe, eine Fahrradsattelhülle mit einem Dämpfungsbereich bereitzustellen, welcher einfach und vorteilhaft an einer Fahrradsattelschale eines Fahrradsattels eines Fahrrads befestigbar ist.

Die Aufgabe der Erfindung wird durch die Fahrradsattelhülle nach Anspruch 1 und durch den Fahrradsattel nach Anspruch 14 gelöst. Die abhängigen Ansprüche beanspruchen bevorzugte Ausführungsformen.

Gemäß einem ersten Aspekt der vorliegenden Erfindung wird die vorliegende Aufgabe durch eine Fahrradsattelhülle gelöst, welche an einer Fahrradsattelschale eines Fahrradsattels eines Fahrrads befestigbar ist, umfassend einen Kontaktbereich, welcher an einem der Fahrradsattelschale zugewandten Bereich der Fahrradsattelhülle angeordnet ist, und welcher geformt ist, an der Fahrradsattelschale anzuliegen, und einen Dämpfungsbereich, welcher an einem dem Kontaktbereich abgewandten Bereich der Fahrradsattelhülle angeordnet ist, wobei der Dämpfungsbereich ein elastisches Material umfasst, welches ausgebildet ist, auf die Fahrradsattelhülle wirkende Kräfte durch eine Verformung des elastischen Materials aufzunehmen, wobei der Kontaktbereich zumindest ein Befestigungselement aufweist, welches ausgebildet ist, die Fahrradsattelschale zu hintergreifen, um die Fahrradsattelhülle zumindest formschlüssig an der Fahrradsattelschale zu befestigen.

Die erfindungsgemäße Fahrradsattelhülle kann durch das Befestigungselement besonders einfach und vorteilhaft an der Fahrradsattelschale befestigt werden.

Der Dämpfungsbereich, welcher ein elastisches Material umfasst, ist ausgebildet, die auf die Fahrradsattelhülle wirkenden Kräfte durch eine Verformung des elastischen Materials aufzunehmen. Dadurch kann beispielsweise der Vorteil erreicht werden, dass ein ergonomisch angenehmes Sitzes auf dem Fahrradsattel ermöglicht wird. Insbesondere ist die Form des Dämpfungsbereichs, insbesondere die Struktur des elastischen Materials an das Gesäß des Fahrradfahrers angepasst.

Der an der Fahrradsattelschale anliegende Kontaktbereich der Fahrradsattelhülle stellt einen wirksamen, insbesondere flächigen, Kontakt zwischen der Fahrradsattelhülle und der Fahrradsattelschale sicher.

Insbesondere liegt der Kontaktbereich an einer dem Kontaktbereich zugewandten Schalenoberseite der Fahrradsattelschale an.

Insbesondere ist der Kontaktbereich als ein gekrümmter Kontaktbereich ausgebildet, welcher flächig an einer gekrümmten Schalenoberseite der Fahrradsattelschale anliegt.

Das Befestigungselement des Kontaktbereichs hintergreift hierbei die Fahrradsattelhülle, und stellt dadurch die zumindest formschlüssige Befestigung der Fahrradsattelhülle an der Fahrradsattelschale sicher. Die zumindest formschlüssige Befestigung stellt hierbei auf der einen Seite eine stabile Befestigung der Fahrradsattelhülle an der Fahrradsattelschale sicher, und stellt auf der anderen Seite auch eine lösbare Befestigungsmöglichkeit bereit, um die Fahrradsattelhülle wieder von der Fahrradsattelschale zu entfernen.

Dadurch kann die Fahrradsattelhülle einfach und vorteilhaft an der Fahrradsattelschale befestigt werden, bzw. im Rahmen eines Austausches der Fahrradsattelhülle auch wieder einfach und vorteilhaft von der Fahrradsattelschale entfernt werden.

Erfindungsgemäß ist das zumindest eine Befestigungselement ausgebildet, die Fahrradsattelschale zu hintergreifen, um die Fahrradsattelhülle formschlüssig und kraftschlüssig an der Fahrradsattelschale zu befestigen.

Dadurch wird der technische Vorteil erreicht, dass durch eine formschlüssige und kraftschlüssige Befestigung der Fahrradsattelhülle an der Fahrradsattelschale eine besonders stabile Verbindung zwischen der Fahrradsattelhülle an der Fahrradsattelschale gewährleistet ist, mit einer reduzierten Neigung zum Verrutschen der Fahrradsattelhülle auf der Fahrradsattelschale.

Beispielsweise kann die Fahrradsattelhülle mit einer Eigenspannung auf die Fahrradsattelschale gepresst werden, um die kraftschlüssige Befestigungskomponente der kraftschlüssigen und formschlüssigen Befestigung der Fahrradsattelhülle an der Fahrradsattelschale zu erreichen.

Erfindungsgemäß umfasst das zumindest eine Befestigungselement eine Mehrzahl von federelastischen Rastarmen oder einen den Kontaktbereich zumindest abschnittsweise umlaufenden Vorsprung, welche ausgebildet sind oder welcher ausgebildet ist, einen Schalenrand der Fahrradsattelschale zu hintergreifen, insbesondere einen zwischen einer Schalenoberseite und einer Schalenunterseite der Fahrradsattelschale geformten Schalenrand der Fahrradsattelschale zu hintergreifen.

Dadurch wird der technische Vorteil erreicht, dass durch das Hintergreifen des Schalenrands durch die federelastischen Rastarmen oder durch den Vorsprung des Kontaktbereichs eine einfach zu bereitstellende zumindest formschlüssige Befestigung der Fahrradsattelhülle an der Fahrradsattelschale ermöglich wird.

Dies wird beispielsweise dadurch erreicht, dass die federelastische Rastarmen oder der Vorsprung bei einem Aufschieben der Fahrradsattelhülle auf die Fahrradsattelschale einfach und vorteilhaft hinter dem Schalenrand der Fahrradsattelschale einschnappen.

Der Schalenrand der Fahrradsattelschale ist hierbei insbesondere zwischen einer Schalenoberseite und einer Schalenunterseite der Fahrradsattelschale geformt.

Die Schalenoberseite ist hierbei die Seite der Fahrradsattelschale, welche in Richtung des Gesäßes des Fahrradfahrers ausgerichtet ist. Insbesondere ist die Schalenoberseite als eine gekrümmte, insbesondere konvex gekrümmte, Schalenoberseite geformt.

Die Schalenunterseite ist hierbei die Seite der Fahrradsattelschale, welche dem Gesäß des Fahrradfahrers abgewandt ist und insbesondere dem Fahrradrahmen des Fahrrads zugewandt ist. Insbesondere ist die Schalenunterseite als eine gekrümmte, insbesondere konkav gekrümmte, Schalenunterseite geformt.

Gemäß einer Alternative kann das zumindest eine Befestigungselement einen den Kontaktbereich zumindest abschnittsweise umlaufenden Vorsprung umfassen. Insbesondere ist der den Kontaktbereich zumindest abschnittsweise umlaufende Vorsprung reversibel verformbar, insbesondere elastisch verformbar, so dass der Vorsprung während des Aufschiebens der Fahrradsattelhülle auf die Fahrradsattelschale zumindest abschnittsweise nach außen gebogen werden kann und dann hinter dem Schalenrand der Fahrradsattelschale eingreifen, bzw. einschnappen kann.

Umläuft der Vorsprung den Kontaktbereich vollständig, so kann der Vorsprung den Schalenrand der Fahrradsattelschale entlang des gesamten Umfangs des Kontaktbereichs vollständig hintergreifen, wodurch eine besonders stabile Befestigung der Fahrradsattelhülle an der Fahrradsattelschale erreicht wird.

Umläuft der Vorsprung den Kontaktbereich nur abschnittsweise und sind somit zwischen den einzelnen Vorsprungbereichen Ausnehmungen, bzw. Einschnitte vorgesehen, so hintergreift der Vorsprung den Schalenrand der Fahrradsattelschale nur an bestimmten Bereichen des Kontaktbereichs. Dadurch kann ein besonders einfaches Aufschieben, bzw. Aufrasten der Fahrradsattelhülle an der Fahrradsattelschale erreicht werden.

Gemäß einer weiteren Alternative kann das zumindest eine Befestigungselement eine Mehrzahl von federelastischen Rastarmen umfassen. Bei Aufschieben der Fahrradsattelhülle auf die Fahrradsattelschale können die federelastischen Rastarme aufgrund ihrer Federelastizität zumindest abschnittsweise nach außen gebogen werden und schnappen dann hinter dem Schalenrand der Fahrradsattelschale ein, um die zumindest formschlüssige Befestigung der Fahrradsattelhülle an der Fahrradsattelschale zu gewährleisten.

Insbesondere umfasst die Mehrzahl von federelastischen Rastarmen zumindest zwei federelastische Rastarme, oder zumindest vier federelastische Rastarme, oder zumindest sechs federelastische Rastarme, oder zumindest acht federelastische Rastarme, welche insbesondere an einander gegenüberliegenden Seiten des Kontaktbereichs der Fahrradsattelschale angeordnet sind, so dass insbesondere eine symmetrische Anordnung von federelastischen Rastarmen an dem Kontaktbereich sichergestellt ist, wodurch insbesondere ein Verrutschen der Fahrradsattelhülle an der Fahrradsattelschale besonders wirksam verhindert werden kann.

Gemäß einer weiteren Alternative, die nicht beansprucht wird, kann das zumindest eine Befestigungselement als ein Clipelement geformt ist, welches ausgebildet, die Fahrradsattelhülle auf der Fahrradsattelschale durch eine Clipverbindung zu befestigen.

In einer Ausführungsform weist das Befestigungselement, insbesondere der federelastische Rastarm oder Vorsprung, einen Befestigungsfortsatz auf, welcher geformt ist, einen Schalenrand der Fahrradsattelschale zu hintergreifen und zumindest abschnittsweise an einer Schalenunterseite der Fahrradsattelschale anzuliegen.

Dadurch wird der technische Vorteil erreicht, dass der Befestigungsfortsatz des Befestigungselements ein wirksames Hintergreifen des Schalenrands der Fahrradsattelschale durch das Befestigungselement sicherstellt und damit die Stabilität der Befestigung der Fahrradsattelhülle an der Fahrradsattelschale verbessert.

Hierbei greift der Befestigungsfortsatz des Befestigungselements insbesondere um den zwischen der Schalenoberseite und der Schalenunterseite der Fahrradsattelschale angeordneten Schalenrand herum und liegt an der Schalenunterseite der Fahrradsattelschale an, um einen zumindest formschlüssigen Kontakt zwischen dem Befestigungsfortsatz und der Schalenunterseite der Fahrradsattelschale zu erreichen, und/oder wird der Befestigungsfortsatz an die Schalenunterseite angepresst, um einen formschlüssige und kraftschlüssigen Kontakt zwischen dem Befestigungsfortsatz und der Schalenunterseite zu erreichen.

In einer Ausführungsform ist das Befestigungselement, insbesondere der federelastische Rastarm oder der Vorsprung, lösbar mit der Fahrradsattelschale verbindbar, um die Fahrradsattelhülle lösbar mit der Fahrradsattelschale zu verbinden.

Dadurch wird der technische Vorteil erreicht, dass durch die lösbare Verbindung zwischen dem Befestigungselement und der Fahrradsattelschale die Fahrradsattelhülle einfach von der Fahrradsattelschale entfernt werden kann. Dies ermöglicht einen flexiblen Austausch einer Fahrradsattelhülle, wenn z.B. in Bezug auf unterschiedliche Fahrradfahrer oder unterschiedliche Fahrradtour-Anforderungen zeitnah und individuell eine unterschiedliche Fahrradsattelhülle auf der Fahrradsattelschale befestigt werden soll.

Eine lösbare Verbindung des Befestigungselements mit der Fahrradsattelschale gemäß der vorliegenden Offenbarung umfasst insbesondere die folgende Bedeutung, wonach die Fahrradsattelhülle von der Fahrradsattelschale entfernt werden kann, ohne dass die Fahrradsattelhülle oder die Fahrradsattelschale hierbei beschädigt werden. Insbesondere kann eine lösbare Verbindung des Befestigungselements mit der Fahrradsattelschale gemäß der vorliegenden Offenbarung ohne ein Werkzeug gelöst werden.

In einer Ausführungsform ist das Befestigungselement, insbesondere der federelastische Rastarm oder der Vorsprung, ausgebildet, in eine Nut und/oder Führungsschiene der Fahrradsattelschale einzugreifen, insbesondere in eine an einer Schalenunterseite der Fahrradsattelschale angeordnete Nut und/oder Führungsschiene einzugreifen.

Dadurch wird der technische Vorteil erreicht, dass durch das Eingreifen des Befestigungselements, in eine insbesondere an der Schalenunterseite angeordnete Nut und/oder Führungsschiene der Fahrradsattelschale, eine besonders stabile Befestigung der Fahrradsattelhülle an der Fahrradsattelschale erreicht werden kann. Insbesondere kann durch das Eingreifen des Befestigungselements in die Nut und/oder Führungsschiene ein, wenn auch nur geringes, Verschieben der Fahrradsattelhülle an der Fahrradsattelschale verhindern. Insbesondere ist die Führungsschiene als eine T-Schiene oder eine X-Schiene ausgebildet.

Erfindungsgemäß umfasst die Fahrradsattelhülle einen Außenbereich, insbesondere Fahrradsattelbezug, welcher an einem dem Kontaktbereich abgewandten Bereich der Fahrradsattelhülle angeordnet ist, wobei der Dämpfungsbereich durch den Außenbereich und den Kontaktbereich zumindest abschnittsweise umschlossen, insbesondere vollständig umschlossen ist.

Dadurch wird der technische Vorteil erreicht, dass der Außenbereich, insbesondere Fahrradsattelbezug, welcher den Dämpfungsbereich zusammen mit dem Kontaktbereich umschließt, einen wirksamen Schutz des Dämpfungsbereichs, insbesondere des elastischen Materials des Dämpfungsbereichs, vor Beschädigung und Verschmutzung sicherstellt.

In einer Ausführungsform ist der Außenbereich, insbesondere Fahrradsattelbezug, mit dem Kontaktbereich verbunden, insbesondere stoffschlüssig, formschlüssig und/oder kraftschlüssig verbunden.

Dadurch wird der technische Vorteil erreicht, dass der Außenbereich, insbesondere Fahrradsattelbezug, mit dem Kontaktbereich lediglich verbunden ist, insbesondere stoffschlüssig, formschlüssig und/oder kraftschlüssig verbunden, wird eine mehrteilige Ausbildung der Fahrradsattelhülle erreicht. Beispielsweise kann nach dem Anbringen des Dichtungselements an dem Kontaktbereich in einem weiteren Schritt anschließend der Außenbereich, insbesondere Fahrradsattelbezug, auf dem Dichtungselement angebracht werden, und mit dem Kontaktbereich verbunden werden.

Ist beispielsweise die Verbindung zwischen dem Außenbereich, insbesondere Fahrradsattelbezug, und dem Kontaktbereich eine formschlüssige und/oder kraftschlüssige Verbindung, kann die Verbindung insbesondere als eine lösbare Verbindung ausgebildet sein, so dass der Außenbereich, insbesondere Fahrradsattelbezug, durch Lösen der lösbaren Verbindung wieder von der Fahrradsattelhülle entfernt und beispielsweise ausgetauscht werden kann.

Erfindungsgemäß weist der Kontaktbereich eine Eingreifführung auf, welche mit dem Außenbereich verbunden ist, wobei eine Führung des Außenbereichs in die Eingreifführung des Kontaktbereichs eingreift, um eine wirksame Verbindung zwischen dem Kontaktbereich und dem Außenbereich bereitzustellen.

Dadurch wird der technische Vorteil erreicht, dass durch das Eingreifen der Führung des Außenbereichs in die Eingreifführung des Kontaktbereichs eine stabile, insbesondere lösbare, Verbindung zwischen dem Außenbereich und dem Kontaktbereich der Fahrradsattelhülle sichergestellt werden kann. Ferner dient die Eingreifführung und der Eingreifführungsfortsatz als optische Abdeckung des Außenbereichs samt Dämpfungsbereich. Desweiteren soll die Eingreifführung und insbesondere der Eingreifführungsfortsatz eine Beschädigung des Außenbereichs und des Dämpfungsbereichs vermeiden, insbes. durch ein Aufreiben oder sog. Aufrubbeln durch die Tretbewegung des Fahrradfahrers beim produktspezifischen Treten beim Fahrradfahren.

Insbesondere kann die Führung des Außenbereichs in die Eingreifführung des Kontaktbereichs eingeschoben werden, um die Verbindung zwischen dem Außenbereich und dem Kontaktbereich bereitzustellen. Insbesondere kann die Führung des Außenbereichs aus der Eingreifführung des Kontaktbereichs herauszogen werden, um die Verbindung zwischen dem Außenbereich und dem Kontaktbereich zu lösen.

Insbesondere ist das elastische Material des Dämpfungsbereichs zwischen der Führung des Außenbereichs und dem Kontaktbereich eingeführt ist, so dass das elastische Material die Führung des Außenbereichs kraftschlüssig an die Eingreifführung drückt, um eine wirksame stabile Befestigung des Außenbereichs an dem Kontaktbereich sicherzustellen.

Insbesondere weist die Eingreifführung des Kontaktbereichs einen Eingreifführungsfortsatz auf, welcher die Führung des Außenbereichs hintergreift, um eine wirksame Befestigung des Außenbereichs an dem Kontaktbereich sicherzustellen.

Insbesondere ist die Eingreifführung an einer dem Befestigungselement abgewandten Seite der Fahrradsattelhülle angeordnet. Insbesondere ist hierbei das Befestigungselement an einer der Schalenunterseite der Fahrradsattelschale zugewandten Seite des Kontaktbereichs geformt und ist die Eingreifführung an einer der Schalenunterseite der Fahrradsattelschale abgewandten Seite des Kontaktbereichs geformt.

Dadurch wird eine unabhängige Befestigung der Fahrradsattelhülle an dem Schalenrand der Fahrradsattelschale durch das Befestigungselement auf der einen Seite und eine Befestigung des Außenbereichs an dem Kontaktbereich durch die Wechselwirkung zwischen der Eingreifführung und der Führung auf der anderen Seite sichergestellt. Insbesondere weist die Eingreifführung des Kontaktbereichs die Form einer Dachrinne auf, in welche eine entsprechend komplementär geformte Führung des Außenbereichs eingreift.

In einer Ausführungsform, die nicht beansprucht wird, weist die Fahrradsattelhülle keinen Außenbereich, insbesondere Fahrradsattelbezug, auf, so dass der Fahrradfahrer direkt auf dem Dämpfungselement sitzt.

Dadurch wird der technische Vorteil erreicht, dass ein besonders einfach zu fertigender Aufbau der Fahrradsattelhülle sichergestellt wird.

In einer Ausführungsform umfasst der Dämpfungsbereich einen ersten Dämpfungsunterbereich, insbesondere ein erstes Gesäßknochenauflageelement, und einen zweiten Dämpfungsunterbereich, insbesondere ein zweites Gesäßknochenauflageelement.

Dadurch wird der technische Vorteil erreicht, dass durch die Ausbildung des Dämpfungsbereichs mit einem ersten Dämpfungsunterbereich, insbesondere erstes Gesäßknochenauflageelement, und einem zweiten Dämpfungsunterbereich, insbesondere zweites Gesäßknochenauflageelement, eine besonders vorteilhafte Anpassung der Fahrradsattelhülle, insbesondere des Dämpfungsbereichs, an die anatomische Form des Gesäßes des Fahrradfahrers erreicht werden kann.

Insbesondere ist zwischen dem ersten und zweiten Dämpfungsunterbereich eine Ausnehmung, insbesondere Schambeinausnehmung, angeordnet.

Insbesondere umfasst der Dämpfungsbereich einen dritten Dämpfungsunterbereich, insbesondere Sattelnasenauflageelement, wobei der dritte Dämpfungsunterbereich insbesondere beabstandet von dem ersten und zweiten Dämpfungsunterbereich angeordnet ist.

Durch die Ausformung der Ausnehmung, insbesondere Schambeinausnehmung, und des dritten Dämpfungsunterbereichs, insbesondere Sattelnasenauflageelement, kann der Sitzkomfort für den Fahrradfahrer weiter gesteigert werden.

In einer Ausführungsform ist der Dämpfungsbereich, insbesondere das elastische Material, stoffschlüssig mit dem Kontaktbereich und/oder dem Außenbereich verbunden.

Dadurch wird der technische Vorteil erreicht, dass durch die stoffschlüssige Verbindung, insbesondere Verkleben, des Dämpfungsbereichs mit dem Kontaktbereich und/oder dem Außenbereich eine besonders stabile Verbindung zwischen dem Dämpfungsbereich mit dem Kontaktbereich sichergestellt werden kann, und sofern ein Außenbereich in der Fahrradsattelhülle vorhanden sein sollte, auch mit dem Außenbereich.

In einer Ausführungsform umfasst das elastische Material des Dämpfungsbereichs ein thermoplastisches Polyurethan (TPU), insbesondere ein expandiertes thermoplastisches Polyurethan (E-TPU), z.B. Infinergy^{®} von der Fa. BASF, ein thermoplastisches Elastomer (TPE), z.B. PEBAX^{®} der Fa. Arkema Inc., USA, ein thermoplastisches Elastomer (TPE), ein thermoplastisches Elastomer-Vulkanisat (TPE-V), Polyurethan (PU), Ethylen-Vinylacetat-Copolymer (EVA), und/oder Polystyrol (PS), insbesondere expandiertes Polystyrol (EPS).

Dadurch wird der technische Vorteil erreicht, dass die genannten elastischen Materialien eine vorteilhafte Dämpfung des Gewichts des Fahrradfahrers und damit einen angenehmen Sitz des Fahrradfahrers auf der Fahrradsattelhülle sicherstellen.

In einer Ausführungsform weist das elastische Material des Dämpfungsbereichs eine Kammerstruktur mit einer Mehrzahl von Kammern, insbesondere Wabenkammern, auf, welche jeweils durch Kammerstege seitlich begrenzt sind, wobei die Kammern insbesondere oben und/oder unten offen sind.

Dadurch wird der technische Vorteil erreicht, dass die Kammern der Kammerstruktur vorteilhafte dämpfende Eigenschaften des Dämpfungselements sicherstellen. Die Kammerstege stabilisieren hierbei die Kammern der Kammerstruktur. Sind die Kammern insbesondere als Wabenkammern ausgebildet, weisen entsprechende Wabenkammern eine hexagonale Deck- und Grundfläche auf. Sind die Kammern insbesondere oben und/oder unten offen kann ein wirksamer Luftaustausch durch die Kammern sichergestellt werden.

Insbesondere sind die Kammerstege der Kammerstruktur jeweils endseitig an einem Verbindungsknoten der Kammerstruktur befestigt, um eine stabile Verbindung innerhalb der Kammerstruktur sicherzustellen. Insbesondere sind an jedem der Verbindungsknoten der Kammerstruktur jeweils vier Enden von unterschiedlichen Kammerstegen der Kammerstruktur befestigt.

Insbesondere weisen die Kammern der Mehrzahl von Kammern jeweils eine obere ringförmige Kammerebene und jeweils eine untere ringförmige Kammerebene auf, wobei die jeweilige obere ringförmige Kammerebene und die jeweilige untere ringförmige Kammerebene jeweils durch Kammerstege verbunden ist, und wobei insbesondere die obere ringförmige Kammerebene, und/oder die untere ringförmige Kammerebene eine mehreckige, insbesondere hexagonale, Ringstruktur aufweisen.

Dadurch wird der technische Vorteil erreicht, dass die verschiedenen Kammerebenen der Kammerstruktur der Kammer, welche durch die Kammerstege verbunden sind, die strukturelle Stabilität der jeweiligen Kammer sicherstellen. Hierbei sind die jeweiligen Kammerebenen als ringförmige Kammerebenen ausgebildet, welche insbesondere in der Ringmitte offen sind, und welche insbesondere am Ringrand mit den Kammerstegen verbunden sind.

Insbesondere sind die oberen ringförmigen Kammerebenen der Mehrzahl von Kammern jeweils seitlich miteinander verbunden sind, und sind die unteren ringförmigen Kammerebenen der Mehrzahl von Kammern jeweils seitlich miteinander verbunden, um eine sich zweidimensional erstreckende Kammerlage zu bilden, wobei insbesondere eine Mehrzahl von sich zweidimensional erstreckenden Kammerlagen miteinander verbunden sind, um eine dreidimensionale Kammerstruktur des Dämpfungselements zu bilden.

Dadurch wird der technische Vorteil erreicht, dass durch die Verbindung von nebeneinander angeordneten Kammern zu einer sich zweidimensional erstreckenden Kammerlage und durch die Verbindung verschiedener zweidimensionaler Kammerlagen, eine vorteilhaft dämpfende dreidimensionale Kammerstruktur des Dämpfungselements aufgebaut werden kann. Hierbei sind insbesondere zwei übereinander angeordnete sich zweidimensional erstreckende Kammerlagen über die Oberseite und/oder Unterseite der jeweiligen Kammerlage miteinander verbunden, um die dreidimensionale Kammerstruktur zu bilden.

In einer Ausführungsform umfasst der Kontaktbereich und/oder der Außenbereich einen Thermoplast-Kunststoff und/oder einen Elastomer-Kunststoff.

Dadurch wird der technische Vorteil erreicht, dass durch die Verwendung eines insbesondere harten Thermoplast-Kunststoffs in dem Kontaktbereich und/oder in dem Außenbereich, eine Hartschalenvariante, bzw. Hardcase-Variante, ermöglicht wird. Ein Thermoplast- Kunststoff umfasst hierbei insbesondere Polycarbonat (PC), Polypropylen (PP), Polyamid (PA), Acryl-Nitril-Butadien-Styrol (ABS) und/oder Polyvinylchlorid (PVC).

Durch die die Verwendung eines insbesondere weichen Elastomer-Kunststoffs in dem Kontaktbereich und/oder in dem Außenbereich, wird eine Weichschalenvariante, bzw. Softcase-Variante, ermöglicht. Ein Elastomer-Kunststoff umfasst hierbei insbesondere ein thermoplastisches Polyurethan (TPU), insbesondere ein expandiertes thermoplastisches Polyurethan (E-TPU), Polystyrol (PS), insbesondere expandiertes Polystyrol (EPS) und/oder Silikon.

In einer Ausführungsform ist die Fahrradsattelhülle als ein 3D-Druck-Bauteil oder als ein Spritzgussformteil geformt.

Dadurch wird der technische Vorteil erreicht, dass sich ein 3D-Druck-Bauteil oder ein Spritzgussformteil einfach und kostengünstig in großen Stückzahlen fertigen lässt.

Gemäß einem zweiten Aspekt der vorliegenden Erfindung wird die vorliegende Aufgabe durch einen Fahrradsattel gelöst, welcher an einem Fahrradrahmen eines Fahrrads befestigbar ist, wobei der Fahrradsattel eine Fahrradsattelschale und eine Fahrradsattelhülle nach dem ersten Aspekt aufweist, wobei das zumindest eine Befestigungselement des Kontaktbereichs der Fahrradsattelhülle ausgebildet ist, die Fahrradsattelschale zu hintergreifen und die Fahrradsattelhülle zumindest formschlüssig an der Fahrradsattelschale zu befestigen.

Dadurch wird der technische Vorteil erreicht, dass ein Fahrradsattel bereitgestellt werden kann, dessen Fahrradsattelhülle einfach und vorteilhaft an der Fahrradsattelschale befestigt werden, und gegebenenfalls im Rahmen eines Austauschs auch wieder vorteilhaft entfernt werden kann.

Die für die Fahrradsattelhülle gemäß dem ersten Aspekt genannten Ausführungsformen sind ebenso Ausführungsformen für den Fahrradsattel gemäß dem zweiten Aspekt.

### Kurze Beschreibung der Figuren

Die Erfindung wird nun unter Bezugnahme auf die beigefügten Figuren erläutert, die exemplarische und nicht beschränkende Ausführungsformen der Erfindung zeigen, wobei
- Figur 1: eine (Quer-)Schnittdarstellung einer Fahrradsattelhülle durch die Sattelnase in etwa auf Höhe nach der Fig. 3 für einen Fahrradsattel eines Fahrrads gemäß einer ersten Ausführungsform, die nicht beansprucht wird,
- Figur 2: eine Schnittdarstellung einer Fahrradsattelhülle durch die Sattelnase in etwa auf Höhe nach der Fig. 3 für einen Fahrradsattel eines Fahrrads gemäß einer zweiten Ausführungsform,
- Figur 3: eine Explosionszeichnung eines Fahrradsattels eines Fahrrads gemäß einer weiteren Ausführungsform,
- Figur 4: einen Fahrradsattel eines Fahrrads mit einer Fahrradsattelhülle gemäß der in Figur 2 dargestellten zweiten Ausführungsform in einer Schnittansicht, und
- Figur 5: einen Fahrradsattel eines Fahrrads mit einer Fahrradsattelhülle gemäß der in Figur 1 dargestellten ersten Ausführungsform, die nicht beansprucht wird, in einer Schnittansicht.

### Detaillierte Beschreibung der Figuren

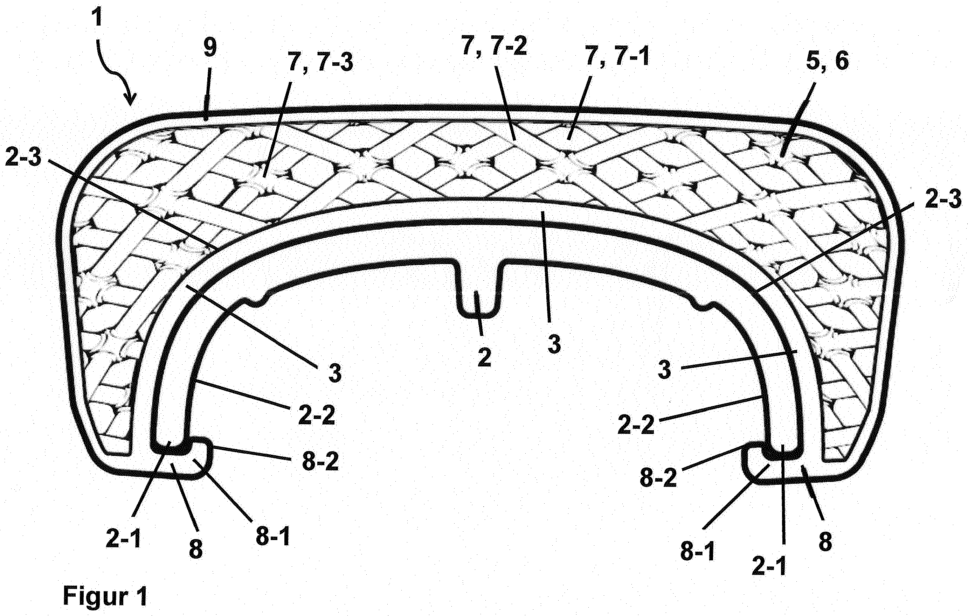

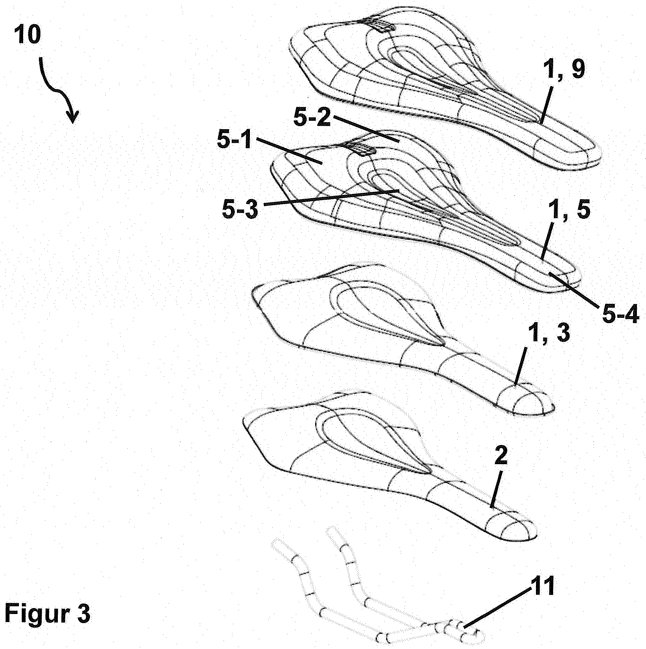

Figur 1 zeigt (Quer-)Schnittdarstellung einer Fahrradsattelhülle 1 durch die Sattelnase in etwa auf Höhe nach der Fig. 3 für einen Fahrradsattel eines Fahrrads gemäß einer ersten Ausführungsform, die nicht beansprucht wird.

Die in der Figur 1 dargestellte Fahrradsattelhülle 1 ist an einer Fahrradsattelschale 2 eines Fahrradsattels eines Fahrrads befestigbar. In der Figur 1 ist die Fahrradsattelhülle 1 und die Fahrradsattelschale 2 des Fahrradsattels in einer Schnittansicht dargestellt.

Die Fahrradsattelschale 2 des Fahrradsattels ist üblicherweise mit einer in Figur 1 nicht dargestellten Sattelstange verbunden, welche eine physische Verbindung zwischen dem Fahrradsattel und dem Fahrrad, insbesondere dem Fahrradrahmen, sicherstellt. Die Fahrradsattelschale 2 besteht üblicherweise aus einem widerstandsfähigen und harten Kunststoffmaterial, wie z.B. einem Thermoplast-Kunststoff oder einem Carbon-Thermoplast-Verbundstoff, und stellt die strukturelle Stabilität des Fahrradsattels sicher, wodurch eine wirksame Aufnahme des Gewichts des Fahrradfahrers sichergestellt wird.

Aus ergonomischen Gründen kann der Fahrradfahrer jedoch nicht direkt auf der harten Fahrradsattelschale 2 sitzen, so dass ein Fahrradsattel üblicherweise, zumindest im Bereich der Hauptsitzfläche, Dämpfungselemente aufweist, welche ein für den Fahrradfahrer angenehmes Sitzen auf dem Fahrradsattel ermöglichen.

Eine entsprechende dämpfende Funktion kommt in dem in Figur 1 dargestellten ersten Ausführungsbeispiel der Fahrradsattelhülle 1 zu.

Die Fahrradsattelhülle 1 umfasst einen Kontaktbereich 3, welcher an einem der Fahrradsattelschale 2 zugewandten Bereich der Fahrradsattelhülle 1 angeordnet ist, und welcher geformt ist, an der Fahrradsattelschale 2 anzuliegen.

Die Fahrradsattelhülle 1 umfasst ferner einen Dämpfungsbereich 5, welcher an einem dem Kontaktbereich 3 abgewandten Bereich der Fahrradsattelhülle 1 angeordnet ist. Um eine wirksame Dämpfung des auf dem Fahrradsattel sitzenden Fahrradfahrers sicherzustellen, umfasst der Dämpfungsbereich 5 ein elastisches Material 6, welches ausgebildet ist, auf die Fahrradsattelhülle 1 wirkende Kräfte durch eine Verformung des elastischen Materials 6 aufzunehmen.

Das elastische Material 6 des Dämpfungsbereichs 5 umfasst insbesondere ein thermoplastisches Polyurethan (TPU), insbesondere ein expandiertes thermoplastisches Polyurethan (E-TPU), ein thermoplastisches Elastomer (TPE), ein thermoplastisches Elastomer-Vulkanisat (TPE-V), Polyurethan (PU), Ethylen-Vinylacetat-Copolymer (EVA), und/oder Polystyrol (PS), insbesondere expandiertes Polystyrol (EPS).

Auch wenn dies in der Figur 1 nur schematisch dargestellt ist, kann das elastische Material 6 des Dämpfungsbereichs 5 eine Kammerstruktur 7 mit einer Mehrzahl von Kammern 7-1, insbesondere Wabenkammern, aufweisen, welche jeweils durch Kammerstege 7-2 seitlich begrenzt sind, wobei die Kammern 7-1 insbesondere oben und/oder unten offen sind.

Aus der Figur 1 ist zu erkennen, dass die Kammerstege 7-2 der Kammerstruktur 7 insbesondere jeweils endseitig an einem Verbindungsknoten 7-3 der Kammerstruktur 7 befestigt sind, um eine stabile Verbindung innerhalb der Kammerstruktur 7 sicherzustellen. Insbesondere sind an jedem der Verbindungsknoten 7-3 der Kammerstruktur 7 jeweils vier Enden von unterschiedlichen Kammerstegen 7-2 der Kammerstruktur 7 befestigt.

Auch wenn dies in der Figur 1 nicht dargestellt ist, können die Kammern 7-1 der Mehrzahl von Kammern 7-1 jeweils eine obere ringförmige Kammerebene und jeweils eine untere ringförmige Kammerebene aufweisen, wobei die jeweilige obere ringförmige Kammerebene und die jeweilige untere ringförmige Kammerebene jeweils durch Kammerstege 7-2 verbunden ist, und wobei insbesondere die obere ringförmige Kammerebene, und/oder die untere ringförmige Kammerebene eine mehreckige, insbesondere hexagonale, Ringstruktur aufweisen.

Insbesondere sind die oberen ringförmigen Kammerebenen der Mehrzahl von Kammern 7-1 jeweils seitlich miteinander verbunden sind, und wobei die unteren ringförmigen Kammerebenen der Mehrzahl von Kammern 7-1 jeweils seitlich miteinander verbunden sind, um eine sich zweidimensional erstreckende Kammerlage zu bilden, und wobei insbesondere eine Mehrzahl von sich zweidimensional erstreckenden Kammerlagen miteinander verbunden sind, um eine dreidimensionale Kammerstruktur 7 des Dämpfungselements 5 zu bilden.

Somit ermöglicht das Dämpfungselements 5 der Fahrradsattelhülle 1 eine wirksame Aufnahme von auf die Fahrradsattelhülle 1 wirkenden Kräften.

Um eine wirksame Befestigung der Fahrradsattelhülle 1 an der Fahrradsattelschale 2 zu ermöglichen, weist der Kontaktbereich 3 zumindest ein Befestigungselement 8 auf, welches ausgebildet ist, die Fahrradsattelschale 2 zu hintergreifen, um die Fahrradsattelhülle 1 zumindest formschlüssig an der Fahrradsattelschale 2 zu befestigen.

Der Kontaktbereich 3 der Fahrradsattelhülle 1 liegt hierbei an einer dem Kontaktbereich 3 zugewandten Schalenoberseite 2-3 der Fahrradsattelschale 2 an. Aus der Figur 1 ist ersichtlich, dass der Kontaktbereich 3 als ein gekrümmter Kontaktbereich 3 ausgebildet ist, welcher flächig an der gekrümmten Schalenoberseite 2-3 der Fahrradsattelschale 2 anliegt. Somit liegt der Kontaktbereich 3 der Fahrradsattelhülle 1 durchgehend zumindest formschlüssig an der Schalenoberseite 2-3 der Fahrradsattelschale 2 an.

Das in dem Ausführungsbeispiel gemäß Figur 1 dargestellte Befestigungselement 8 umfasst einen den Kontaktbereich 3 zumindest abschnittsweise umlaufenden Vorsprung 8-1, welcher ausgebildet ist, einen Schalenrand 2-1 der Fahrradsattelschale 2 zu hintergreifen.

Der Schalenrand 2-1 ist hierbei zwischen einer Schalenunterseite 2-2 und der Schalenoberseite 2-3 der Fahrradsattelschale 2 angeordnet.

Durch das als Vorsprung 8-1 geformte Befestigungselement 8, welches den Schalenrand 2-1 der Fahrradsattelschale 2 hintergreift, kann eine wirksame formschlüssige Verbindung zwischen der Fahrradsattelhülle 1 und der Fahrradsattelschale 2 sichergestellt werden.

Insbesondere kann das Befestigungselement 8, insbesondere der Vorsprung 8-1, eine Eigenspannung aufweisen, wodurch die Fahrradsattelhülle 1 ferner auf die Fahrradsattelschale 2 gepresst wird, so dass eine wirksame formschlüssige und kraftschlüssige Verbindung zwischen der Fahrradsattelhülle 1 und der Fahrradsattelschale 2 sichergestellt werden kann.

Insbesondere weist der Vorsprung 8-1 einen Befestigungsfortsatz 8-2 auf, welcher geformt ist, den Schalenrand 2-1 der Fahrradsattelschale 2 zu hintergreifen und zumindest abschnittsweise an einer Schalenunterseite 2-2 der Fahrradsattelschale 2 anzuliegen.

Auch wenn dies in Figur 1 nicht dargestellt ist, kann das Befestigungselement 8 alternativ zu dem Vorsprung 8-1 auch eine Mehrzahl von federelastischen Rastarmen umfassen, welche ausgebildet sind, einen Schalenrand 2-1 der Fahrradsattelschale 2 zu hintergreifen.

Insbesondere ist das Befestigungselement 8, insbesondere Vorsprung 8-1, lösbar mit der Fahrradsattelschale 2 verbunden, um die Fahrradsattelhülle 1 lösbar mit der Fahrradsattelschale 2 zu verbinden.

Auch wenn dies in der Figur 1 nicht dargestellt ist, kann das Befestigungselement 8, insbesondere der Vorsprung 8-1, insbesondere in eine Nut und/oder Führungsschiene der Fahrradsattelschale 2 eingreifen, insbesondere in eine an einer Schalenunterseite 2-2 der Fahrradsattelschale 2 angeordnete Nut und/oder Führungsschiene eingreifen.

Die Fahrradsattelhülle 1 umfasst ferner einen optional vorhandenen Außenbereich 9, insbesondere Fahrradsattelbezug, welcher an einem dem Kontaktbereich 3 abgewandten Bereich der Fahrradsattelhülle 1 angeordnet ist. Wie aus der Figur 1 zu entnehmen ist, wird der Dämpfungsbereich 5 durch den Außenbereich 9 zumindest abschnittsweise umschlossen. Insbesondere umschließt der Außenbereich 9 zusammen mit dem Kontaktbereich 3 den Dämpfungsbereich 5 vollständig.

Der Dämpfungsbereich 5, insbesondere das elastische Material 6, ist hierbei insbesondere stoffschlüssig mit dem Kontaktbereich 3 und dem Außenbereich 9 verbunden.

Aus der Figur 1 ist zu erkennen, dass der Außenbereich 9 einstückig mit dem Kontaktbereich 3 geformt ist.

Der Kontaktbereich 3 und/oder der Außenbereich 9 können einen Thermoplast-Kunststoff oder einen Elastomer-Kunststoff umfassen, wobei der Thermoplast-Kunststoff insbesondere Polycarbonat (PC), Polypropylen (PP), und/oder Polyvinylchlorid (PVC) umfasst, wobei der Elastomer-Kunststoff insbesondere thermoplastisches Polyurethan (TPU), insbesondere ein expandiertes thermoplastisches Polyurethan (E-TPU), und/oder Silikon, umfasst.

Die Fahrradsattelhülle 1 kann insbesondere als ein 3D-Druck-Bauteil oder als ein Spritzgussformteil geformt sein.

Die Fahrradsattelhülle 1 gemäß der vorliegenden Offenbarung kann durch das die Fahrradsattelschale 2 hintergreifende Befestigungselement 8 einfach und vorteilhaft an der Fahrradsattelschale 2 zumindest formschlüssig befestigt werden.

Dadurch wird ein modularer Aufbau des Fahrradsattels sichergestellt, bei dem die Fahrradsattelhülle 1 einfach und austauschbar auf der Fahrradsattelschale 2 angebracht und auch wieder entfernt werden kann.

Bei unterschiedlichen Gewichten, bzw. unterschiedlichen Körperproportionen von unterschiedlichen Fahrradfahrern, bzw. bei unterschiedlichen Fahrradtouren, z.B. Mountainbike-Tour im Gelände oder Rennrad-Tour auf der Straße, ermöglicht dies die einfache Verwendung von unterschiedlichen Fahrradsattelhüllen 1 auf der Fahrradsattelschale 2 je nach beabsichtigter Verwendung.

Somit stellt die Fahrradsattelhülle 1 gemäß der vorliegenden Offenbarung eine Vielzahl von individuell anpassbaren und austauschbaren Dämpfungsvarianten bereit, welche zudem je nach Nutzerwunsch in Bezug auf die gewünschte Farbe, Form und Design angepasst werden können.

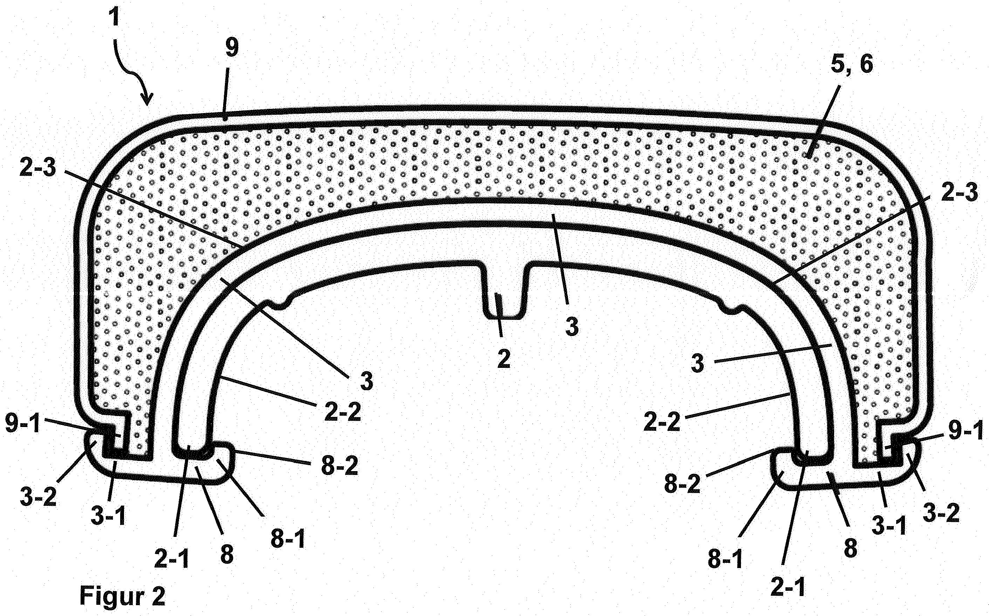

Figur 2 zeigt eine Fahrradsattelhülle 1 für einen Fahrradsattel eines Fahrrads gemäß einer zweiten Ausführungsform.

Ebenso wie die in Figur 1 dargestellte Fahrradsattelhülle 1 gemäß der ersten Ausführungsform umfasst auch die in Figur 2 dargestellte Fahrradsattelhülle 1 gemäß der zweiten Ausführungsform einen Kontaktbereich 3, einen Dämpfungsbereich 5 mit einem elastischen Material 6 und zumindest ein Befestigungselement 8 des Kontaktbereichs 3, welches ausgebildet ist, die Fahrradsattelschale 2 zu hintergreifen, um die Fahrradsattelhülle 1 zumindest formschlüssig an der Fahrradsattelschale 2 zu befestigen.

Im Unterschied zu der in Figur 1 dargestellten ersten Ausführungsform weist die in Figur 2 dargestellte Fahrradsattelhülle 1 gemäß der zweiten Ausführungsform keine Kammerstruktur 7 auf. Das elastische Material 6 des Dämpfungsbereichs 5 umfasst insbesondere ein thermoplastisches Polyurethan (TPU), insbesondere ein expandiertes thermoplastisches Polyurethan (E-TPU), ein thermoplastisches Elastomer (TPE), ein thermoplastisches Elastomer-Vulkanisat (TPE-V), Polyurethan (PU), Ethylen-Vinylacetat-Copolymer (EVA), und/oder Polystyrol (PS), insbesondere expandiertes Polystyrol (EPS).

Ferner ist in der in Figur 2 dargestellten Fahrradsattelhülle 1 der Außenbereich 9 der Fahrradsattelhülle 1 jedoch nicht einstückig mit dem Kontaktbereich 3 geformt, sondern ist die Fahrradsattelhülle 1 mit dem Kontaktbereich 3 verbunden, insbesondere stoffschlüssig, formschlüssig und/oder kraftschlüssig verbunden.

Erfindungsgemäß weist der Kontaktbereich 3 eine Eingreifführung 3-1 auf, welche mit dem Außenbereich 9 verbunden ist, wobei eine Führung 9-1 des Außenbereichs 9 in die Eingreifführung 3-1 des Kontaktbereichs 3 eingreift, um eine wirksame Verbindung zwischen dem Kontaktbereich 3 und dem Außenbereich 9 bereitzustellen.

Aus der Figur 2 ist ferner zu erkennen, dass das elastische Material 6 des Dämpfungsbereichs 5 zwischen der Führung 9-1 des Außenbereichs 9 und dem Kontaktbereich 3 eingeführt ist, so dass das elastische Material 6 die Führung 9-1 des Außenbereichs 9 kraftschlüssig an die Eingreifführung 3-1 drückt, um eine wirksame stabile Befestigung des Außenbereichs 9 an dem Kontaktbereich 3 sicherzustellen.

Insbesondere weist die Eingreifführung 3-1 des Kontaktbereichs 3 einen Eingreifführungsfortsatz 3-2 auf, welcher die Führung 9-1 des Außenbereichs 9 hintergreift, um eine wirksame Befestigung des Außenbereichs 9 an dem Kontaktbereich 3 sicherzustellen.

Aus der Figur 2 ist ersichtlich, dass die Eingreifführung 3-1 an einer dem Befestigungselement 8 abgewandten Seite der Fahrradsattelhülle 1 angeordnet ist. Insbesondere ist hierbei das Befestigungselement 8 an einer der Schalenunterseite 2-2 der Fahrradsattelschale 2 zugewandten Seite des Kontaktbereichs 3 geformt und ist die Eingreifführung 3-1 an einer der Schalenunterseite 2-2 der Fahrradsattelschale 2 abgewandten Seite des Kontaktbereichs 3 geformt.

Figur 3 zeigt einen Fahrradsattel 10 eines Fahrrads gemäß einer weiteren Ausführungsform. Figur 3 zeigt eine Explosivdarstellung des Fahrradsattels 10.

Der in Figur 3 dargestellte Fahrradsattel 10 weist einen Streben 11 auf, an welchem die Sattelstange zur Befestigung des Fahrradsattels 10 an einem Fahrradrahmen des Fahrrads befestigen werden kann. Der Streben 11 ist mit einer Fahrradsattelschale 2 verbunden.

Auf die Fahrradsattelschale 2 kann eine Fahrradsattelhülle 1 angebracht werden, welche, wie aus den Figuren 1 und 2 zu entnehmen ist, aus einem Kontaktbereich 3, einem Dämpfungsbereich 5 und einem optional vorhandenen Außenbereich 9, insbesondere Fahrradsattelbezug, geformt ist.

Auf die Fahrradsattelschale 2 kann eine Fahrradsattelhülle 1 zumindest formschlüssig dadurch befestigt werden, dass ein in der Figur 3 nicht dargestellte Befestigungselement 8 des Kontaktbereichs 3 der Fahrradsattelhülle 1 die Fahrradsattelschale 2 hintergreift.

Die Fahrradsattelhülle 1 umfasst ferner einen Dämpfungsbereich 5 aus einem elastischen Material 6, welcher insbesondere stoffschlüssig mit dem Kontaktbereich 3 verbunden ist.

Der Dämpfungsbereich 5 umfasst einen ersten Dämpfungsunterbereich 5-1, insbesondere ein erstes Gesäßknochenauflageelement, und einen zweiten Dämpfungsunterbereich 5-2, insbesondere ein zweites

Gesäßknochenauflageelement, so dass der Dämpfungsbereich 5 an die anatomische Form des Gesäßes des Fahrradfahrers vorteilhaft angepasst werden kann.

Insbesondere ist zwischen dem ersten und zweiten Dämpfungsunterbereich 5-1, 5-2 eine Ausnehmung 5-3, insbesondere Schambeinausnehmung, angeordnet. Insbesondere umfasst der Dämpfungsbereich einen dritten Dämpfungsunterbereich 5-4, insbesondere Sattelnasenauflageelement, wobei der dritte Dämpfungsunterbereich 5-4 insbesondere beabstandet von dem ersten und zweiten Dämpfungsunterbereich 5-1, 5-2 angeordnet ist.

Durch die Ausformung der Ausnehmung 5-3, insbesondere Schambeinausnehmung, und des dritten Dämpfungsunterbereichs 5-4, insbesondere Sattelnasenauflageelement, kann der Sitzkomfort für den Fahrradfahrer weiter gesteigert werden.

Aus der in Figur 3 gewählten Darstellung ist ersichtlich, dass eine dem ersten, zweiten und dritten Dämpfungsbereich 5-1, 5-2, 5-4, bzw. der Ausnehmung 5-3 entsprechende Konturierung in der Fahrradsattelschale 2, in dem Kontaktbereich 3, und/oder in dem Außenbereich 9 geformt sein kann.

Die Fahrradsattelhülle 1 umfasst ferner optional einen Außenbereich 9, insbesondere Fahrradsattelbezug, welcher an einem dem Kontaktbereich 3 abgewandten Bereich der Fahrradsattelhülle 1 angeordnet ist.

Für weitere Details in Bezug auf die Fahrradsattelhülle 1 gemäß der Figur 3 wird auf die umfangreichen Ausführungen zu den Figuren 1 und 2 verwiesen.

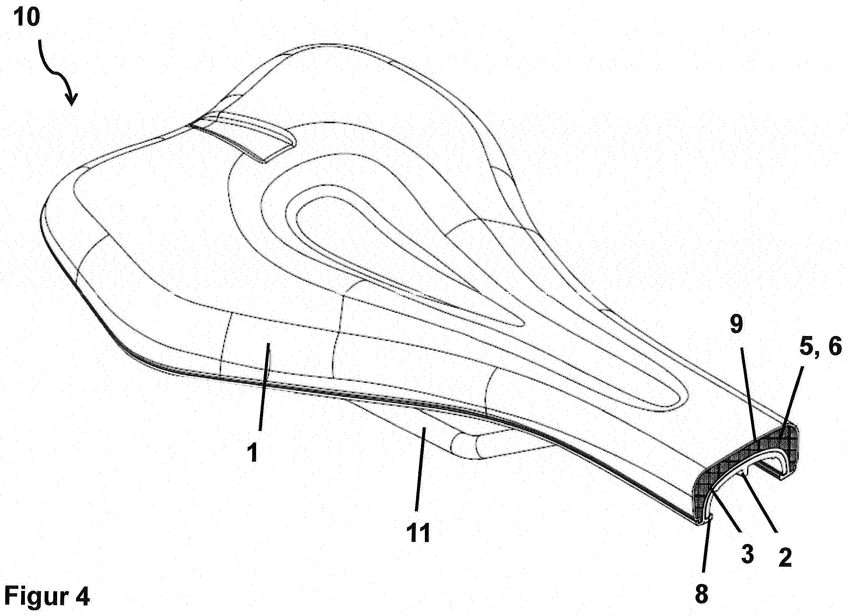

Figur 4 zeigt einen Fahrradsattel 10 eines Fahrrads mit einer Fahrradsattelhülle 1 gemäß der in Figur 2 dargestellten zweiten Ausführungsform in einer Schnittansicht.

Der in Figur 4 dargestellte Fahrradsattel 10 weist Streben 11, eine an den Streben 11 befestigte Fahrradsattelschale 2, und eine an der Fahrradsattelschale 2 befestigte Fahrradsattelhülle 1 auf. Die in Figur 4 in einer Schnittansicht dargestellte Fahrradsattelhülle 1 weist einen Aufbau auf, welcher dem Aufbau der in Figur 2 dargestellten Fahrradsattelhülle 1 gemäß der zweiten Ausführungsform entspricht.

Die Fahrradsattelhülle 1 weist einen Kontaktbereich 3 auf, welcher an einem der Fahrradsattelschale 2 zugewandten Bereich der Fahrradsattelhülle 1 angeordnet ist, und welcher geformt ist, an der Fahrradsattelschale 2 anzuliegen.

Die Fahrradsattelhülle 1 weist einen Dämpfungsbereich 5 auf, welcher an einem dem Kontaktbereich 3 abgewandten Bereich der Fahrradsattelhülle 1 angeordnet ist, wobei der Dämpfungsbereich 5 ein elastisches Material 6 umfasst, welches ausgebildet ist, auf die Fahrradsattelhülle 1 wirkende Kräfte durch eine Verformung des elastischen Materials 6 aufzunehmen.

Der Kontaktbereich 3 weist zumindest ein Befestigungselement 8 auf, welches ausgebildet ist, die Fahrradsattelschale 2 zu hintergreifen, um die Fahrradsattelhülle 1 zumindest formschlüssig, insbesondere formschlüssig und kraftschlüssig, an der Fahrradsattelschale 2 zu befestigen.

Die Fahrradsattelhülle 1 weist ferner einen optional vorhandenen Außenbereich 9, insbesondere Fahrradsattelbezug, auf, welcher mit dem Kontaktbereich 3 verbunden, insbesondere stoffschlüssig, formschlüssig und/oder kraftschlüssig, verbunden ist.

Für weitere Details wird hierzu auf die Figur 2 verwiesen.

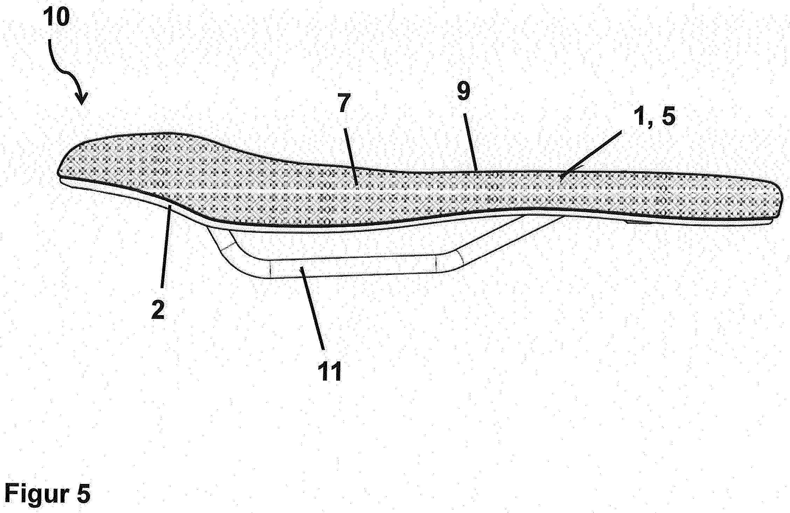

Figur 5 zeigt einen Fahrradsattel 10 eines Fahrrads mit einer Fahrradsattelhülle 1 gemäß der in Figur 1 dargestellten ersten Ausführungsform in einer Schnittansicht.

Der in Figur 5 dargestellte Fahrradsattel 10 weist einen Streben 11, eine an dem Streben 11 befestigte Fahrradsattelschale 2, und eine an der Fahrradsattelschale 2 befestigte Fahrradsattelhülle 1 auf. Die in Figur 5 in einer Schnittansicht dargestellte Fahrradsattelhülle 1 weist einen Aufbau auf, welcher dem Aufbau, der in Figur 1 dargestellten Fahrradsattelhülle 1 gemäß der ersten Ausführungsform, entspricht.

Für weitere Details wird hierzu, insbesondere in Bezug auf die Kammerstruktur 7, wird auf die Figur 1 verwiesen.

### Bezugszeichen

- 1: Fahrradsattelhülle
- 2: Fahrradsattelschale
- 2-1: Schalenrand
- 2-2: Schalenunterseite
- 2-3: Schalenoberseite
- 3: Kontaktbereich
- 3-1: Eingreifführung
- 3-2: Eingreifführungsfortsatz
- 5: Dämpfungsbereich
- 5-1: Erster Dämpfungsunterbereich
- 5-2: Zweiter Dämpfungsunterbereich
- 5-3: Ausnehmung
- 5-4: Dritter Dämpfungsunterbereich
- 6: Elastisches Material
- 7: Kammerstruktur
- 7-1: Kammer
- 7-2: Kammersteg
- 7-3: Verbindungsknoten
- 8: Befestigungselement
- 8-1: Vorsprung
- 8-2: Befestigungsfortsatz
- 9: Außenbereich
- 9-1: Führung
- 10: Fahrradsattel
- 11: Streben

## Patentansprüche

1. Fahrradsattelhülle (1), welche an einer Fahrradsattelschale (2) eines Fahrradsattels eines Fahrrads befestigbar ist, umfassend:
einen Kontaktbereich (3), welcher an einem der Fahrradsattelschale (2) zugewandten Bereich der Fahrradsattelhülle (1) angeordnet ist, und welcher geformt ist, an der Fahrradsattelschale (2) anzuliegen, und
einen Dämpfungsbereich (5), welcher an einem dem Kontaktbereich (3) abgewandten Bereich der Fahrradsattelhülle (1) angeordnet ist, wobei der Dämpfungsbereich (5) ein elastisches Material (6) umfasst, welches ausgebildet ist, auf die Fahrradsattelhülle (1) wirkende Kräfte durch eine Verformung des elastischen Materials (6) aufzunehmen,
wobei die Fahrradsattelhülle (1) einen Außenbereich (9) umfasst, welcher an einem dem Kontaktbereich (3) abgewandten Bereich der Fahrradsattelhülle (1) angeordnet ist, wobei der Dämpfungsbereich (5) durch den Außenbereich (9) und den Kontaktbereich (3) zumindest abschnittsweise umschlossen ist,
**dadurch gekennzeichnet, dass** der Kontaktbereich (3) zumindest ein Befestigungselement (8, 8-1) aufweist, welches ausgebildet ist, die Fahrradsattelschale (2) zu hintergreifen, um die Fahrradsattelhülle (1) zumindest formschlüssig an der Fahrradsattelschale (2) zu befestigen,
wobei das zumindest eine Befestigungselement (8, 8-1) ausgebildet ist, die Fahrradsattelschale (2) zu hintergreifen, um die Fahrradsattelhülle (1) formschlüssig und kraftschlüssig an der Fahrradsattelschale (2) zu befestigen,
wobei das zumindest eine Befestigungselement (8, 8-1) eine Mehrzahl von federelastischen Rastarmen oder einen den Kontaktbereich (3) zumindest abschnittsweise umlaufenden Vorsprung (8-1) umfasst, welche ausgebildet sind oder welcher ausgebildet ist, einen Schalenrand (2-1) der Fahrradsattelschale (2) zu hintergreifen,
wobei der Kontaktbereich (3) eine Eingreifführung (3-1) aufweist, welche mit dem Außenbereich (9) verbunden ist, wobei eine Führung (9-1) des Außenbereichs (9) in die Eingreifführung (3-1) des Kontaktbereichs (3) eingreift, um eine wirksame Verbindung zwischen dem Kontaktbereich (3) und dem Außenbereich (9) bereitzustellen.

2. Fahrradsattelhülle (1) nach Anspruch 1, wobei die Mehrzahl von federelastischen Rastarmen oder der den Kontaktbereich (3) zumindest abschnittsweise umlaufende Vorsprung (8-1) ausgebildet sind oder ausgebildet ist, den zwischen einer Schalenoberseite (2-3) und einer Schalenunterseite (2-2) der Fahrradsattelschale (2) geformten Schalenrand (2-1) der Fahrradsattelschale (2) zu hintergreifen.

3. Fahrradsattelhülle (1) nach Anspruch 2, wobei das Befestigungselement (8, 8-1), insbesondere jeder der federelastischen Rastarme oder der Vorsprung (8-1), einen Befestigungsfortsatz (8-2) aufweist, welcher geformt ist, den Schalenrand (2-1) der Fahrradsattelschale (2) zu hintergreifen und zumindest abschnittsweise an der Schalenunterseite (2-2) der Fahrradsattelschale (2) anzuliegen.

4. Fahrradsattelhülle (1) nach Anspruch 2 oder 3, wobei das Befestigungselement (8, 8-1), insbesondere jeder der federelastischen Rastarme oder der Vorsprung (8-1), lösbar mit der Fahrradsattelschale (2) verbindbar ist, um die Fahrradsattelhülle (1) lösbar mit der Fahrradsattelschale (2) zu verbinden.

5. Fahrradsattelhülle (1) nach einem der Ansprüche 2 bis 4, wobei das Befestigungselement (8, 8-1), insbesondere jeder der federelastischen Rastarme oder der Vorsprung (8-1), ausgebildet ist, in eine Nut und/oder Führungsschiene der Fahrradsattelschale (2) einzugreifen, insbesondere in eine an der Schalenunterseite (2-2) der Fahrradsattelschale (2) angeordnete Nut und/oder Führungsschiene einzugreifen.

6. Fahrradsattelhülle (1) nach einem der vorangehenden Ansprüche, wobei der Außenbereich (9) ein Fahrradsattelbezug ist, wobei der Dämpfungsbereich (5) durch den Außenbereich (9) und den Kontaktbereich (3) vollständig umschlossen ist.

7. Fahrradsattelhülle (1) nach Anspruch 6, wobei der Außenbereich (9), insbesondere Fahrradsattelbezug, mit dem Kontaktbereich (3) verbunden, insbesondere stoffschlüssig, formschlüssig und/oder kraftschlüssig verbunden ist.

8. Fahrradsattelhülle (1) nach einem der vorangehenden Ansprüche, wobei der Dämpfungsbereich (5) einen ersten Dämpfungsunterbereich (5-1), insbesondere ein erstes Gesäßknochenauflageelement, und einen zweiten Dämpfungsunterbereich (5-2), insbesondere ein zweites Gesäßknochenauflageelement, umfasst.

9. Fahrradsattelhülle (1) nach einem der vorangehenden Ansprüche, wobei der Dämpfungsbereich (5), insbesondere das elastische Material (6), stoffschlüssig mit dem Kontaktbereich (3) und/oder dem Außenbereich (9) verbunden ist.

10. Fahrradsattelhülle (1) nach einem der vorangehenden Ansprüche, wobei das elastische Material (6) des Dämpfungsbereichs (5) ein thermoplastisches Polyurethan (TPU), insbesondere ein expandiertes thermoplastisches Polyurethan (E-TPU), ein thermoplastisches Elastomer (TPE), ein thermoplastisches Elastomer-Vulkanisat (TPE-V), Polyurethan (PU), Ethylen-Vinylacetat-Copolymer (EVA), und/oder Polystyrol (PS), insbesondere expandiertes Polystyrol (EPS), umfasst.

11. Fahrradsattelhülle (1) nach einem der vorangehenden Ansprüche, wobei das elastische Material (6) des Dämpfungsbereichs (5) eine Kammerstruktur (7) mit einer Mehrzahl von Kammern (7-1), insbesondere Wabenkammern, aufweist, welche jeweils durch Kammerstege (7-2) seitlich begrenzt sind, wobei die Kammern (7-1) insbesondere oben und/oder unten offen sind.

12. Fahrradsattelhülle (1) nach einem der vorangehenden Ansprüche, wobei der Kontaktbereich (3) und/oder der Außenbereich (9) einen Thermoplast-Kunststoff und/oder einen Elastomer-Kunststoff umfasst.

13. Fahrradsattelhülle (1) nach einem der vorangehenden Ansprüche, wobei die Fahrradsattelhülle (1) als ein 3D-Druck-Bauteil oder als ein Spritzgussformteil geformt ist.

14. Fahrradsattel (10), welcher an einem Fahrradrahmen eines Fahrrads befestigbar ist, wobei der Fahrradsattel (10) eine Fahrradsattelschale (2) und eine Fahrradsattelhülle (1) nach einem der vorangehenden Ansprüche aufweist, wobei das zumindest eine Befestigungselement (8, 8-1) des Kontaktbereichs (3) der Fahrradsattelhülle (1) ausgebildet ist, die Fahrradsattelschale (2) zu hintergreifen und die Fahrradsattelhülle (1) an der Fahrradsattelschale (2) zu befestigen.

## Claims

1. Bicycle saddle shell (1) which can be fastened to a bicycle saddle shell (2) of a bicycle saddle of a bicycle, comprising:
a contact region (3) which is arranged on a region of the bicycle saddle shell (1) facing the bicycle saddle shell (2) and which is shaped to bear against the bicycle saddle shell (2), and a damping region (5) which is arranged on a region of the bicycle saddle shell (1) facing away from the contact region (3), wherein the damping region (5) comprises an elastic material (6) which is designed to absorb forces acting on the bicycle saddle shell (1) by a deformation of the elastic material (6), wherein the bicycle saddle shell (1) comprises an outer region (9) which is arranged on a region of the bicycle saddle shell (1) facing away from the contact region (3), wherein the damping region (5) is enclosed at least in sections by the outer region (9) and the contact region (3),
**characterized in that** the contact region (3) has at least one fastening element (8, 8-1) which is designed to engage behind the bicycle saddle shell (2) in order to fasten the bicycle saddle shell (1) at least in a form-fitting manner to the bicycle saddle shell (2), wherein the at least one fastening element (8, 8-1) is designed to engage behind the bicycle saddle shell (2) in order to fasten the bicycle saddle shell (1) in a form-fitting and force-fitting manner to the bicycle saddle shell (2), wherein the at least one fastening element (8, 8-1) comprises a plurality of spring-elastic latching arms or a projection (8-1) which encircles the contact region (3) at least in sections and which are designed or are designed to engage behind a shell edge (2-1) of the bicycle saddle shell (2), wherein the contact region (3) has an engagement guide (3-1) which is connected to the outer region (9), wherein a guide (9-1) of the outer region (9) engages in the engagement guide (3-1) of the contact region (3) in order to provide an effective connection between the contact region (3) and the outer region (9).

2. Bicycle saddle shell (1) according to Claim 1, wherein the plurality of spring-elastic latching arms or the projection (8-1) which encircles the contact region (3) at least in sections are designed or are designed to engage behind the shell edge (2-1) of the bicycle saddle shell (2) formed between a shell upper side (2-3) and a shell lower side (2-2) of the bicycle saddle shell (2).

3. Bicycle saddle shell (1) according to Claim 2, wherein the fastening element (8, 8-1), in particular each of the spring-elastic latching arms or the projection (8-1), has a fastening extension (8-2) which is shaped to engage behind the shell edge (2-1) of the bicycle saddle shell (2) and to bear at least in sections against the shell lower side (2-2) of the bicycle saddle shell (2).

4. Bicycle saddle shell (1) according to Claim 2 or 3, wherein the fastening element (8, 8-1), in particular each of the spring-elastic latching arms or the projection (8-1), can be connected releasably to the bicycle saddle shell (2) in order to connect the bicycle saddle shell (1) releasably to the bicycle saddle shell (2).

5. Bicycle saddle shell (1) according to one of Claims 2 to 4, wherein the fastening element (8, 8-1), in particular each of the spring-elastic latching arms or the projection (8-1), is designed to engage in a groove and/or guide rail of the bicycle saddle shell (2), in particular to engage in a groove and/or guide rail arranged on the shell lower side (2-2) of the bicycle saddle shell (2).

6. Bicycle saddle shell (1) according to one of the preceding claims, wherein the outer region (9) is a bicycle saddle cover, wherein the damping region (5) is completely enclosed by the outer region (9) and the contact region (3).

7. Bicycle saddle shell (1) according to Claim 6, wherein the outer region (9), in particular bicycle saddle cover, is connected to the contact region (3), in particular connected in a materially integral, form-fitting and/or force-fitting manner.

8. Bicycle saddle shell (1) according to one of the preceding claims, wherein the damping region (5) comprises a first damping subregion (5-1), in particular a first buttocks support element, and a second damping subregion (5-2), in particular a second buttocks support element.

9. Bicycle saddle shell (1) according to one of the preceding claims, wherein the damping region (5), in particular the elastic material (6), is connected in a materially integral manner to the contact region (3) and/or the outer region (9).

10. Bicycle saddle shell (1) according to one of the preceding claims, wherein the elastic material (6) of the damping region (5) comprises a thermoplastic polyurethane (TPU), in particular an expanded thermoplastic polyurethane (E-TPU), a thermoplastic elastomer (TPE), a thermoplastic elastomer vulcanizate (TPE-V), polyurethane (PU), ethylene-vinyl acetate copolymer (EVA), and/or polystyrene (PS), in particular expanded polystyrene (EPS).

11. Bicycle saddle shell (1) according to one of the preceding claims, wherein the elastic material (6) of the damping region (5) has a chamber structure (7) with a plurality of chambers (7-1), in particular honeycomb chambers, which are each delimited laterally by chamber webs (7-2), wherein the chambers (7-1) are open in particular at the top and/or at the bottom.

12. Bicycle saddle shell (1) according to one of the preceding claims, wherein the contact region (3) and/or the outer region (9) comprises a thermoplastic and/or an elastomer.

13. Bicycle saddle shell (1) according to one of the preceding claims, wherein the bicycle saddle shell (1) is shaped as a 3D printed component or as an injection molded part.

14. Bicycle saddle (10) which can be fastened to a bicycle frame of a bicycle, wherein the bicycle saddle (10) has a bicycle saddle shell (2) and a bicycle saddle shell (1) according to one of the preceding claims,
wherein the at least one fastening element (8, 8-1) of the contact region (3) of the bicycle saddle shell (1) is designed to engage behind the bicycle saddle shell (2) and to fasten the bicycle saddle shell (1) to the bicycle saddle shell (2).

## Revendications

1. Enveloppe de selle de bicyclette (1), qui peut être fixée à une coque de selle de bicyclette (2) d'une selle de bicyclette d'une bicyclette, comprenant :
une zone de contact (3), qui est disposée sur une zone de l'enveloppe de selle de bicyclette (1) tournée vers la coque de selle de bicyclette (2), et qui est formée pour s'appliquer contre la coque de selle de bicyclette (2), et une zone d'amortissement (5), qui est disposée sur une zone de l'enveloppe de selle de bicyclette (1) opposée à la zone de contact (3), la zone d'amortissement (5) comprenant un matériau élastique (6), qui est réalisé pour absorber des forces agissant sur l'enveloppe de selle de bicyclette (1) par une déformation du matériau élastique (6), l'enveloppe de selle de bicyclette (1) comprenant une zone extérieure (9), qui est disposée sur une zone de l'enveloppe de selle de bicyclette (1) opposée à la zone de contact (3), la zone d'amortissement (5) étant entourée au moins en partie par la zone extérieure (9) et la zone de contact (3),
**caractérisée en ce que** la zone de contact (3) présente au moins un élément de fixation (8, 8-1), qui est réalisé pour venir en prise par l'arrière avec la coque de selle de bicyclette (2), afin de fixer l'enveloppe de selle de bicyclette (1) au moins par engagement par correspondance de formes sur la coque de selle de bicyclette (2), l'au moins un élément de fixation (8, 8-1) étant réalisé pour venir en prise par l'arrière avec la coque de selle de bicyclette (2), afin de fixer l'enveloppe de selle de bicyclette (1) par engagement par correspondance de formes et par force sur la coque de selle de bicyclette (2), l'au moins un élément de fixation (8, 8-1) comprenant une pluralité de bras d'encliquetage élastiques à ressort ou une saillie (8-1) entourant au moins en partie la zone de contact (3), qui sont réalisés ou qui sont réalisés pour venir en prise par l'arrière avec un bord de coque (2-1) de la coque de selle de bicyclette (2), la zone de contact (3) présentant un guide d'engagement (3-1), qui est relié à la zone extérieure (9), un guide (9-1) de la zone extérieure (9) venant en prise dans le guide d'engagement (3-1) de la zone de contact (3), afin de fournir une liaison active entre la zone de contact (3) et la zone extérieure (9).

2. Enveloppe de selle de bicyclette (1) selon la revendication 1, la pluralité de bras d'encliquetage élastiques à ressort ou la saillie (8-1) entourant au moins en partie la zone de contact (3) étant réalisée ou étant réalisée pour venir en prise par l'arrière avec le bord de coque (2-1) de la coque de selle de bicyclette (2) formé entre un côté supérieur de coque (2-3) et un côté inférieur de coque (2-2) de la coque de selle de bicyclette (2).

3. Enveloppe de selle de bicyclette (1) selon la revendication 2, l'élément de fixation (8, 8-1), en particulier chacun des bras d'encliquetage élastiques à ressort ou la saillie (8-1), présentant un prolongement de fixation (8-2), qui est formé pour venir en prise par l'arrière avec le bord de coque (2-1) de la coque de selle de bicyclette (2) et pour s'appliquer au moins en partie contre le côté inférieur de coque (2-2) de la coque de selle de bicyclette (2).

4. Enveloppe de selle de bicyclette (1) selon la revendication 2 ou 3, l'élément de fixation (8, 8-1), en particulier chacun des bras d'encliquetage élastiques à ressort ou la saillie (8-1), pouvant être relié de manière amovible à la coque de selle de bicyclette (2), afin de relier de manière amovible l'enveloppe de selle de bicyclette (1) à la coque de selle de bicyclette (2).

5. Enveloppe de selle de bicyclette (1) selon l'une quelconque des revendications 2 à 4, l'élément de fixation (8, 8-1), en particulier chacun des bras d'encliquetage élastiques à ressort ou la saillie (8-1), étant réalisé pour venir en prise dans une rainure et/ou un rail de guidage de la coque de selle de bicyclette (2), en particulier pour venir en prise dans une rainure et/ou un rail de guidage disposé sur le côté inférieur de coque (2-2) de la coque de selle de bicyclette (2).

6. Enveloppe de selle de bicyclette (1) selon l'une quelconque des revendications précédentes, la zone extérieure (9) étant un revêtement de selle de bicyclette, la zone d'amortissement (5) étant complètement entourée par la zone extérieure (9) et la zone de contact (3).

7. Enveloppe de selle de bicyclette (1) selon la revendication 6, la zone extérieure (9), en particulier le revêtement de selle de bicyclette, étant reliée à la zone de contact (3), en particulier par liaison de matière, par engagement par correspondance de formes et/ou par force.

8. Enveloppe de selle de bicyclette (1) selon l'une quelconque des revendications précédentes, la zone d'amortissement (5) comprenant une première sous-zone d'amortissement (5-1), en particulier un premier élément d'appui d'os fessier, et une deuxième sous-zone d'amortissement (5-2), en particulier un deuxième élément d'appui d'os fessier.

9. Enveloppe de selle de bicyclette (1) selon l'une quelconque des revendications précédentes, la zone d'amortissement (5), en particulier le matériau élastique (6), étant relié par liaison de matière à la zone de contact (3) et/ou à la zone extérieure (9).

10. Enveloppe de selle de bicyclette (1) selon l'une quelconque des revendications précédentes, le matériau élastique (6) de la zone d'amortissement (5) comprenant un polyuréthane thermoplastique (TPU), en particulier un polyuréthane thermoplastique expansé (E-TPU), un élastomère thermoplastique (TPE), un vulcanisat d'élastomère thermoplastique (TPE-V), du polyuréthane (PU), un copolymère d'éthylène-acétate de vinyle (EVA), et/ou du polystyrène (PS), en particulier du polystyrène expansé (EPS).

11. Enveloppe de selle de bicyclette (1) selon l'une quelconque des revendications précédentes, le matériau élastique (6) de la zone d'amortissement (5) présentant une structure de chambre (7) avec une pluralité de chambres (7-1), en particulier des chambres en nid d'abeilles, qui sont limitées latéralement à chaque fois par des nervures de chambre (7-2), les chambres (7-1) étant ouvertes en particulier en haut et/ou en bas.

12. Enveloppe de selle de bicyclette (1) selon l'une quelconque des revendications précédentes, la zone de contact (3) et/ou la zone extérieure (9) comprenant une matière plastique thermoplastique et/ou une matière plastique élastomère.

13. Enveloppe de selle de bicyclette (1) selon l'une quelconque des revendications précédentes, l'enveloppe de selle de bicyclette (1) étant formée en tant que composant d'impression 3D ou en tant que pièce moulée par injection.

14. Selle de bicyclette (10), qui peut être fixée à un cadre de bicyclette d'une bicyclette, la selle de bicyclette (10) présentant une coque de selle de bicyclette (2) et une enveloppe de selle de bicyclette (1) selon l'une quelconque des revendications précédentes,
l'au moins un élément de fixation (8, 8-1) de la zone de contact (3) de l'enveloppe de selle de bicyclette (1) étant réalisé pour venir en prise par l'arrière avec la coque de selle de bicyclette (2) et pour fixer l'enveloppe de selle de bicyclette (1) à la coque de selle de bicyclette (2).
